# EUROPÄISCHE PATENTSCHRIFT

(11) **EP 1 594 595 B1**
(45) Veröffentlichungstag und Bekanntmachung des Hinweises auf die Patenterteilung: **28.10.2009**
(21) Anmeldenummer: 04712124.9
(22) Anmeldetag: 18.02.2004
(51) Int. Cl.: B01D 53/94, F01N 3/20

(54) **VORRICHTUNG ZUM ZUFÜHREN VON AMMONIAK AN EINEN IN DEN ABGASSTRANG EINER BRENNKRAFTMASCHINE EINGESCHALTETEN REDUKTIONSKATALYSATOR**
DEVICE FOR SUPPLYING AMMONIA TO A REDUCTION CATALYST ARRANGED IN AN EXHAUST GAS EVACUATION SYSTEM GOT AN INTERNAL COMBUSTION ENGINE
DISPOSITIF POUR CONDUIRE DE L'AMMONIAC JUSQU'A UN CATALYSEUR DE REDUCTION MONTE DANS LE SYSTEME D'EVACUATION DES GAZ D'ECHAPPEMENT D'UN MOTEUR A COMBUSTION INTERNE

(30) Priorität: 18.02.2003 DE 10306843; 25.02.2003 DE 10308257; 27.03.2003 DE 10313998; 26.05.2003 DE 20308348 U
(43) Veröffentlichungstag der Anmeldung: 16.11.2005
(73) Patentinhaber: HJS Fahrzeugtechnik GmbH & Co. KG, 58706 Menden (DE)
(72) Erfinder: SCHULTE, Hermann-Josef, 58710 Menden (DE); KOLL, Jochen, 59755 Arnsberg (DE); KRAFT, Franz, 59757 Arnsberg (DE)
(74) Vertreter: Haverkamp, Jens
(86) Internationale Anmeldenummer: PCT/IB2004/050127
(87) Internationale Veröffentlichungsnummer: WO 2004/073840

(56) Entgegenhaltungen:
- DE-A- 3 422 175
- US-B1- 6 399 034
- PATENT ABSTRACTS OF JAPAN Bd. 0121, Nr. 43 (C-492), 30. April 1988 (1988-04-30) & JP 62 262729 A (MITSUBISHI HEAVY IND LTD), 14. November 1987 (1987-11-14)
- PATENT ABSTRACTS OF JAPAN Bd. 2000, Nr. 23, 10. Februar 2001 (2001-02-10) & JP 2001 157822 A (MITSUI CHEMICALS INC), 12. Juni 2001 (2001-06-12)

## Beschreibung

Die Erfindung betrifft eine Vorrichtung zum Zuführen von Ammoniak in gasförmiger Phase an einen in den Abgasstrang einer Brennkraftmaschine, insbesondere eines Dieselmotors eingeschalteten Reduktionskatalysator, umfassend einen ausgangsseitig mit dem Abgasstrang über eine Zuführleitung verbundenen Behälter zum Bevorraten eines unter Wärmezufuhr NH₃ abspaltenden Precursors, etwa Ammoniumcarbamat sowie umfassend eine Heizeinrichtung zum Herbeiführen einer thermolytischen NH₃-Abspaltung des NH₃-Precursors.

Neben Kohlenmonoxid (CO), Partikeln und Kohlenwasserstoffen (HC) gehören insbesondere die Stickstoffoxide (NOx) zu den umweltgefährdenden direkt emittierten Primärschadstoffen, die beim Betrieb von Verbrennungsmotoren, insbesondere Dieselmotoren, entstehen. Ein Einsatz von Dreiwegekatalysatoren, wie sie bei Ottomotoren und Gasmotoren verwendet werden, sind aufgrund eines Sauerstoffüberschusses im dieselmotorischen Abgas nicht einsetzbar. Aus diesem Grunde wurde zur Reduktion der Stickoxidemission bei Dieselmotoren ein selektiv arbeitender SCR-Katalysator (Selective Catalytic Reduction-Katalysator) entwickelt, in dem mit einem zugeführten Reduktionsmittel, nämlich Ammoniak (NH₃) die ausgestoßenen Stickstoffoxide zu lufteigenem N₂ und H₂O reduziert werden.

Eine gattungsgemäße Vorrichtung zum Zuführen von Ammoniak in seiner gasförmigen Phase in den Abgasstrang eines Verbrennungsmotors eines Kraftfahrzeuges ist aus der DE 197 20 209 C1 bekannt. Diese Entstickungseinrichtung umfasst einen gasdichten und druckfesten Konverter, in dem sich ein thermolytisch NH₃-abspaltender Stoff oder ein thermolytisch NH₃-abspaltendes Stoffgemisch - ein sogenannter NH₃-Precursor - befindet. Als Stoff kann beispielsweise Ammoniumcarbamat vorgesehen sein. Der Konverter ist über eine Zuführleitung mit dem Abgasstrang eines Dieselmotors verbunden, wobei die Zuführleitung in den Abgasstrang in Strömungsrichtung des Abgases vor der Eingangsseite eines SCR-Katalysators mündet. Als Dosiereinrichtung ist ein Taktventil vorgesehen, welches durch eine Steuereinheit angesteuert ist, so dass in Abhängigkeit bestimmter Motorbetriebskenndaten die benötigte NH₃-Menge in den Abgasstrom eingedüst werden kann. Der Konverter besteht im Wesentlichen aus einem druckfesten Reaktionsbehälter, der von einer als Wärmeschlange ausgebildeten Heizeinrichtung umgeben ist. Die Heizeinrichtung ist über eine Zuleitung und eine Ableitung in den Kühlwasserkreislauf des Dieselmotors eingebunden.

Durch Aufheizen des beispielsweise als NH₃-Precursor eingesetzten Ammoniumcarbamats zersetzt sich dieses in NH₃ und CO₂. Dieses Gasgemisch sammelt sich in dem druckfesten Reaktionsbehälter bis zum Aufbau eines entsprechenden Innendruckes an. Bei Erreichen eines bestimmten Innendruckes in dem Reaktionsbehälter stellt sich ein Gleichgewichtszustand ein, so dass weiteres Ammoniumcarbamat nicht zersetzt wird. Unter Betriebsbedingungen des Motors, bei dem das die Heizeinrichtung durchströmende Kühlwasser in der Regel eine Temperatur zwischen 80 und 100°C aufweist, herrscht in dem Reaktionsbehälter ein dem Gleichgewichtszustand entsprechender Druck, der bei Ammoniumcarbamat bei etwa 3 - 4 bar liegt. Damit eine ausreichende NH₃-Menge zum Eindüsen in den Abgasstrom bei einem dynamischen Betrieb des Dieselmotors bereitgestellt werden kann, dient der Konverter gleichfalls als Reaktionsgasspeicher, um eine bestimmte Reaktionsgasmenge bzw. das darin enthaltene NH₃ zu bevorraten.

Dieses vorbekannte System arbeitet somit nach dem Prinzip, dass in dem Konverter eine gewisse NH₃-Menge, unter einem gewissen Druck stehend, bevorratet wird, aus der dann die jeweils benötigte NH₃-Dosis zum Entsticken der Abgase in den Abgasstrang entnommen wird. Von Vorteil gegenüber einem Mitführen von NH₃ in Druckflaschen ist bei diesem vorbekannten System, dass nur eine relativ geringe NH₃-Menge verglichen mit einer in Druckflaschen mitgeführten vorhanden ist.

Bekannt sind ferner solche Vorrichtungen, mit denen eine "just-in-time"-Abspaltung von NH₃ von einem NH₃-Precursor zur NOₓ-Reduktion vorgenommen wird. Eine solche Vorrichtung ist beispielsweise aus DE 34 22 175 A1 bekannt. Die Erzeugung des NH₃ erfolgt durch Erhitzen des NH₃-Precursors, wobei jeweils nur eine solche NH₃-Menge gebildet wird, wie dieses, dem jeweiligen Lastzustand des Motors entsprechend, benötigt wird. Gemäß DE 34 22 175 A1 erfolgt eine Dosierung der jeweils benötigten NH₃-Menge durch Steuern der Heizleistung. Bevorratet wird der NH₃-Precursor gemäß diesem Stand der Technik in einem Behälter, dem eine beheizbare Zersetzungskammer nachgeschaltet ist, in der die Thermolyse des NH₃-Precursors erfolgt. Ausgangsseitig ist diese Zersetzungskammer über eine Zuführleitung mit dem Abgasstrang der Brennkraftmaschine verbunden. Als Heizeinrichtungen sind elektrische Widerstandsheizungen oder Infrarotstrahler vorgeschlagen worden.

Zwar ist die Verwendung dieser vorbekannten Vorrichtung für stationäre Anlagen, welche im allgemeinen nur wenigen Lastwechseln und wenn dann nur vorherbestimmten Lastwechseln unterworfen sind, geeignet. Für einen Einsatz im mobilen Bereich, wie beispielsweise bei Nutzfahrzeugen oder Personenkraftwagen, ist der Einsatz dieser vorbekannten Technologie unzweckmäßig, da die Reaktionszeit des Systems zu langsam und somit das System zu träge ist, um den im Straßenverkehr unerwartet und in schneller Folge auftretenden Motorlastwechseln mit entsprechend unterschiedlichen NOₓ-Emissionen gerecht werden zu können. Wird nämlich der Motorbetriebszustand zu einer bestimmten Zeit erfasst und daraus eine bestimmte NH₃-Dosierung berechnet, muss zunächst der NH₃-abspaltende Stoff zur Produktion des NH₃-Gasgemisches der Zersetzungskammer zugeführt und darin erwärmt werden. Im Straßenverkehr, insbesondere im Stadtverkehr unterliegt ein Motor jedoch ständigen, vor allem unvorhergesehenen Lastwechseln, so dass die letztendlich zugeführte NH₃-Menge nicht an einen zwischenzeitlich geänderten Motorbetriebszustand angepasst ist. Wird zu wenig NH₃ zugeführt, ist auch die damit mögliche NOₓ-Reduktion nur begrenzt durchführbar. Ist das zugeführte NH₃ überdosiert, tritt nicht oxidiertes NH₃ aus dem Katalysator aus.

Ausgehend von dem diskutierten Stand der Technik liegt der Erfindung daher die Aufgabe zugrunde, eine eingangs genannte Vorrichtung dergestalt weiterzubilden, dass mit dieser die Bereitstellung einer benötigten NH₃-Dosis als Gasphase zum Zuführen an einen in den Abgasstrang einer Brennkraftmaschine eingeschalteten Reduktionskatalysator möglich ist und sich diese Vorrichtung insbesondere für einen Einsatz bei einem dynamischen Betrieb der Brennkraftmaschine eignet.

Diese Aufgabe wird durch eine eingangs genannte, gattungsgemäße Vorrichtung gelöst, bei der die Vorrichtung eine in dem Behälter angeordnete, an eine Steuereinheit angeschlossene elektrische Heizeinrichtung umfasst und dass die Heizeinrichtung und der NH₃-Precursor in dem Behälter dergestalt zueinander angeordnet ist, dass eine Erwärmung des NH₃-Precursors zur thermolytischen NH₃-Abspaltung durch einen unmittelbaren Wärmeübergang von zumindest einer erwärmten Oberfläche der Heizeinrichtung auf den NH₃-Precursor erfolgt.

Diese Vorrichtung vereint in einem Behälter den NH₃-Precursor und die Heizeinrichtung, wobei beide in unmittelbarem Kontakt zueinander angeordnet sind, womit es sich bei diesem System grundsätzlich um ein geschlossenes System handelt und die Erwärmung des NH₃-Precursors nicht nach dem Prinzip eines Durchlauferhitzers vorgesehen ist. Bei der Heizeinrichtung kann es sich beispielsweise um eine elektrische Widerstandsheizung handeln, an deren Heizelement, beispielsweise eine Heizplatte der NH₃-Precursor unmittelbar anliegt. Der NH₃-Precursor kann grundsätzlich in flüssiger oder in fester Form vorliegen. Aus Praktikabilitätsgründen wird jedoch der Einsatz eines in fester Form vorliegenden NH₃-Precursors bevorzugt. Bei diesem kann es sich um einen Pressling handeln, dessen eine Stirnseite an dem Heizelement der Heizeinrichtung anliegt.

Durch den unmittelbaren Wärmeübergang von der Heizeinrichtung bzw. dessen Heizelement auf das angrenzende NH₃-Precursormaterial ist es möglich, innerhalb kürzester Zeit eine dem jeweiligen Betriebszustand der Brennkraftmaschine entsprechende NH₃ enthaltene Reaktionsgasmenge zur Verfügung zu stellen, damit die bei der Verbrennung entstehenden Stickoxide an dem Reduktionskatalysator reduziert werden können. Infolge des unmittelbaren Wärmeüberganges - etwa durch unmittelbares Angrenzen des NH₃-Precursors an die Oberfläche des Heizelementes - ist nicht nur eine rasche Erwärmung der an das Heizelement grenzenden Bereiche des NH₃-Precursors gegeben, sondern eine Erwärmung dieser Bereiche lässt sich auch mit einem geringen Energieaufwand realisieren.

Mit einer solchen Vorrichtung kann die jeweils benötigte Reaktionsgas- bzw. NH₃-Menge just-in-time produziert werden kann, so dass in Abhängigkeit vor der Lastsituation die jeweils benötigte NH₃-Menge zur Verfügung gestellt werden kann. Ausgenutzt werden kann bei Einsatz dieser Vorrichtung die NH₃-Speicherfähigkeit des Reduktionskatalysators dergestalt, dass bei einem Betrieb der Brennkraftmaschine, beispielsweise des Dieselmotors dafür Sorge getragen wird, dass die NH₃-Beladung des Reduktionskatalysators erfasst und auf einem solchen Niveau gehalten wird, dass auch bei sprunghaften Lastwechseln eine zum Entsticken der dabei entstehenden Stickoxide ausreichende NH₃-Menge zur Verfügung steht, wobei in dieses Regelungsverfahren als Kenngrößen die Speicherfähigkeit des Reduktionskatalysators hinsichtlich einer NH₃-Beladung und die Trägheit der NH₃ generierenden Vorrichtung eingehen. Durch Ausnutzen der NH₃-Speicherfähigkeit des Reduktionskatalysators kann somit die beschriebene Vorrichtung zum Generieren von NH₃ hinsichtlich ihres Ansprechverhaltens grundsätzlich kleiner ausgelegt werden, da NH₃-Spitzenbedarfe auch durch das in dem Reduktionskatalysator gespeicherte NH₃ mit abgedeckt werden können.

Das Vorsehen einer elektrischen Heizeinrichtung ist nicht nur zweckmäßig hinsichtlich ihres raschen Ansprechverhaltens, sondern auch aufgrund der einfachen Ansteuerung. Zu diesem Zweck ist die Heizeinrichtung an eine Steuereinheit angeschlossen, über die die Heizeinrichtung angesteuert ist. Dies kann beispielsweise durch ein EIN- und AUS-Schalten und/oder durch Ändern der Heizleistung erfolgen.

Eine solche just-in-time NH₃-Produktion ist auch im Hinblick auf sicherheitsrelevante Anforderungen angestrebt, da dann die Menge des in gasförmiger Phase vorliegenden NH₃ auf ein Minimum reduziert ist.

Für den Fall, dass in dem Behälter als NH₃-Precursor ein Feststoff, etwa ein stabförmiger Pressling enthalten ist, ist es zweckmäßig, diesen mittels eines Kolben zur Oberfläche des Heizelementes hin mit einem gewissen Anpressdruck zu beaufschlagen. Es ist dann sichergestellt, dass der NH₃-Precursor in jedem Betriebszustand der Vorrichtung und bei Einsatz einer solchen Vorrichtung in einem Kraftfahrzeug auch bei unwegsamen Wegstrecken in Kontakt mit der Oberfläche des Heizelementes steht. Bei einer solchen Konzeption ist es zweckmäßig, den Behälter durch einen Kolben in zwei gasdicht voneinander getrennte Behälterabschnitte zu teilen. In dem einem Behälterabschnitt befindet sich der NH₃-Precursor zusammen mit der Heizeinrichtung. Gemäß einem Ausführungsbeispiel ist der andere Behälterabschnitt an eine externe Einrichtung zum Bereitstellen des benötigten bzw. gewünschten Anpressdruckes angeschlossen, etwa durch Druckbeaufschlagen dieses Behälterabschnittes. Dies kann ein externer Druckspeicher sein, beispielsweise nach Art einer Stickstofffeder ausgebildet. Befindet sich die Vorrichtung an Bord eines Kraftfahrzeuges, welches über ein Druckluftsystem verfügt, wie beispielsweise Lastkraftwagen mit einem Druckluftbremssystem, kann dieser Behälterabschnitt an das Druckluftsystem angeschlossen sein. Es wird dann über den Kompressor einer solchen Druckluftanlage der notwendige Druck bereitgestellt. Gegebenenfalls kann zwischen der Druckluftanlage und diesem Behälterabschnitt ein Druckreduzierventil angeordnet sein. Grundsätzlich ist es auch möglich, den vorbeschriebenen Behälterabschnitt an ein Hydrauliksystem anzuschließen, um über dieses den gewünschten Anpressdruck bereitzustellen. Gleichfalls besteht die Möglichkeit, diesen Behälterabschnitt mit einem unter Überdruck stehenden Medium zu befüllen, beispielsweise Stickstoff, so dass der notwendige Anpressdruck aus diesem Behälterabschnitt selbst heraus bereitgestellt wird. Der in dem als Gasraum anzusprechenden Behälterabschnitt durch seine Befüllung etwa mit Stickstoff herrschende Druck kann im Hinblick auf einen Verbrauch des in dem anderen Behälterabschnitt enthaltenen Ammoniumcarbamates und einer damit einhergehenden Volumenabnahme ausgewertet werden. Ein Verbrauch von Ammoniumcarbamat führt zu einer Vergrößerung des Gasraumes und somit zu einer Druckabnahme, die proportional zur Volumenzunahme des Gasraumes und entsprechend zur Volumenabnahme des anderen Behälterabschnitts mit dem Ammoniumcarbamat bei einem Ammoniumcarbamatverbrauch ist.

Eine Druckbeaufschlagung des vorzugsweise als Pressling eingesetzten NH₃-Precursors kann auch auf mechanischem Wege erfolgen. Beispielsweise kann ein Scheren- oder Spindelantrieb vorgesehen sein, um entweder unmittelbar oder über eine Andruckscheibe auf den den Behälter in die beiden Behälterabschnitte trennenden Kolben zu wirken. Ein Aktor zum Antreiben einer solchen Andrückeinrichtung befindet sich zweckmäßigerweise außerhalb des Behälters und ist über eine lösbare Kupplung mit der Andrückeinrichtung verbunden. Der Antrieb erfolgt zweckmäßigerweise über ein selbsthemmendes Getriebe, beispielsweise ein Spindelantrieb zum Antreiben einer Schere. Bei Einsatz eines solchen mechanischen Andrücksystems kann ein Drucksensor zwischen dem Kolben und der Andrückeinrichtung angeordnet sein, um über den erfassten Druck den Aktor einer solchen mechanischen Andrückeinrichtung anzusteuern.

Als Kolben zum Trennen des Behälters in die beiden vorbeschriebenen Behälterabschnitte dient zweckmäßigerweise ein Rollkolben. Die sich daraus ergebenden Vorteile betreffen insbesondere die Gasdichtheit zwischen den beiden Behälterabschnitten und seine Leichtgängigkeit.

Die Heizeinrichtung verfügt zweckmäßigerweise über eine Heizplatte als Heizelement an der der NH₃-Precursor, vorzugsweise als Pressling ausgebildet, anliegt. Die Heizplatte kann über Kanäle und/oder über kanalartige Vertiefungen verfügen, über die das bei einem Betrieb der Heizeinrichtung gebildetes Reaktionsgas von der Kontaktfläche zwischen dem Heizelement und dem Pressling wegströmen kann. Grundsätzlich ist der Einsatz derartiger Kanäle oder kanalartigen Vertiefungen nicht notwendig, da das durch die Thermolyse gebildete NH₃ enthaltene Reaktionsgas allein aufgrund des bei der Thermolyse entstehenden Druckers von dem Ort seiner Entstehung bestrebt ist zu entweichen. Dies kann jedoch mitunter zur Folge haben, dass bei der Thermolyse der NH₃-Precursorpressling je nach bereitgestelltem Gegendruck durch die Andrückeinrichtung kurzseitig von der Oberfläche des Heizelementes abgehoben wird. Daher ist das Vorsehen von Kanälen und/oder kanalartigen Vertiefungen zweckmäßig, um das durch Thermolyse gebildete Reaktionsgas über diese Wegsamkeiten von dem Ort ihrer Entstehung wegführen zu können.

Gemäß einer weiteren Ausgestaltung ist vorgesehen, dass die Oberfläche des Heizelementes, etwa einer Heizplatte eine zum NH₃-Precursor als Feststoff weisende noppenartige Strukturierung trägt. Die von dem Heizelement abragenden Noppen dringen bei der ersten Erwärmung des Heizelementes in die daran anliegende Oberfläche des NH₃-Precursors ein, vergrößern dadurch die beim Wärmeübergang auf den NH₃-Precursor wirksame Oberfläche und vermögen gleichzeitig den als Pressling vorliegenden NH₃-Precursor in der Ebene des Heizelementes zu fixieren.

Da in aller Regel bei einem Betrieb der Heizeinrichtung der Ausgang des Behälters zum Einbringen des durch die Thermolyse abgespaltenen NH₃ in den Abgasstrang geöffnet ist, besteht ein nicht unerhebliches Druckgefälle zwischen dem bei der Thermolyse entstehenden Gasdruck und den im Abgasstrom befindlichen Druck, so dass diese Druckdifferenz ein selbsttätiges Wegströmen des durch die Thermolyse gebildeten Reaktionsgases von dem Ort seiner Entstehung begünstigt.

Die beschriebene Vorrichtung umfasst eine Heizeinrichtung mit zumindest einer erwärmbaren Oberfläche, die beispielsweise - wie oben beschrieben - als Heizplatte ausgebildet sein kann. In einer Weiterbildung ist vorgesehen, dass der Heizeinrichtung mehrere erwärmbare Oberflächen zugeordnet sind, denen jeweils ein eigener NH₃-Precursorpressling zugeordnet ist. Die erwärmbaren Oberflächen einer solchen Heizeinrichtung können gemeinsam oder auch unabhängig voneinander ansteuerbar sein. In einer anderen Weiterbildung ist vorgesehen, dass die Vorrichtung insgesamt über mehrere Behälter mit einer eigenen Heizeinrichtung verfügt, die dann gemeinsam und/oder kaskardenartig betrieben werden können. Bei Einsatz mehrerer unabhängig voneinander ansteuerbarer Heizeinrichtungen oder bei Vorsehen einer Heizeinrichtung mit mehreren unabhängig voneinander ansteuerbaren Heizelementen kann eine Regelung der NH₃-Produktion in einem größeren Umfange an dynamische Motorlastsituationen angepasst werden.

Der Behälter einer solchen vorbeschriebenen Vorrichtung weist zweckmäßigerweise eine Schnittstelle zum Öffnen desselben auf. Nach Verbrauch des darin vorzugsweise als Feststoff enthaltenen NH₃-Precursors kann dieser geöffnet werden, mit neuem NH₃-Precursor befüllt und anschließend wieder verschlossen werden. Ein solcher Behälter eignet sich auch, im Rahmen eines Mehrwegesystems eingesetzt zu werden. Der Behälter bildet dann ein in sich geschlossenes System, aus dem lediglich dann NH₃ enthaltenes Reaktionsgas entweicht, wenn der Behälter über eine Kupplung an die zum Abgasstrang führende Zuführleitung angeschlossen ist. Ein Benutzer ist bei einer solchen Ausgestaltung somit in keinem Zeitpunkt entweichendem NH₃ ausgesetzt. Bei Vorsehen einer solchen Konzeption, bei der der Behälter als Wechselbehälter ausgebildet ist, ist die Verbindung der beiden Behälterteile zweckmäßigerweise so vorgesehen, dass ein Öffnen nicht ohne weiteres und nur mit bestimmtem Werkzeug möglich ist. Dieses kann beispielsweise durch Einsatz eines Spannringes oder einer entsprechenden Umbördelung realisiert sein, durch die die beiden miteinander zu verbindenden Flansche der Behälterteile formschlüssig verbunden sind. Ein Öffnen und eine Neubefüllung des Behälters erfolgt dann werksseitig, was auch den Vorteil mit sich bringt, dass ein Öffnen eines solchen Behälters im abgekühlten Zustande erfolgen kann. Der Wechsel eines Behälters an einem im Betrieb befindlichen Kraftfahrzeug oder an einem Kraftfahrzeug, das sich auf Betriebstemperatur befindet, ist ohne weiteres möglich, da lediglich die Anschlüsse durch Zusammenführen der komplementären Kupplungsteile hergestellt werden müssen. Die Kupplungsteile sind insbesondere bei Integration des Magnetventils in dem Behälter beim Anschließen vollkommen drucklos. Ferner kann vorgesehen sein, das Magnetventil als integralen Bestandteil des Behälters auszubilden.

Nachfolgend ist die Erfindung anhand von Ausführungsbeispielen unter Bezugnahme auf die beigefügten Figuren beschrieben. Es zeigen:
- **Fig. 1:**: eine Vorrichtung zum Zuführen von Ammoniak an einen in den Abgasstrang einer Brennkraftmaschine eingeschalteten Reduktionskatalysator in einer schematisierten, zum Teil geschnittenen Darstellung in einer ersten Betriebsstellung eines der Vorrichtung zugehörigen Behälters,
- **Fig. 2:**: die Vorrichtung der Figur 1 mit dem Behälter in einer weiteren Betriebsstellung,
- **Fig. 3:**: eine Vorrichtung entsprechend Figur 1 gemäß einem weiteren Ausführungsbeispiel,
- **Fig. 4:**: eine Vorrichtung entsprechend Figur 1 mit einem Behälter gemäß einem weiteren Ausführungsbeispiel,
- **Fig. 5:**: eine weitere Vorrichtung zum Zuführen von Ammoniak an einen in den Abgasstrang einer Brennkraftmaschine eingeschalteten Reduktionskatalysator in einer schematischen, zum Teil geschnittenen Darstellung und mit einem nachgeschalteten Ventil in seiner Offenstellung und
- **Fig. 6:**: das Ventil der Figur 5 in seiner Geschlossenstellung.

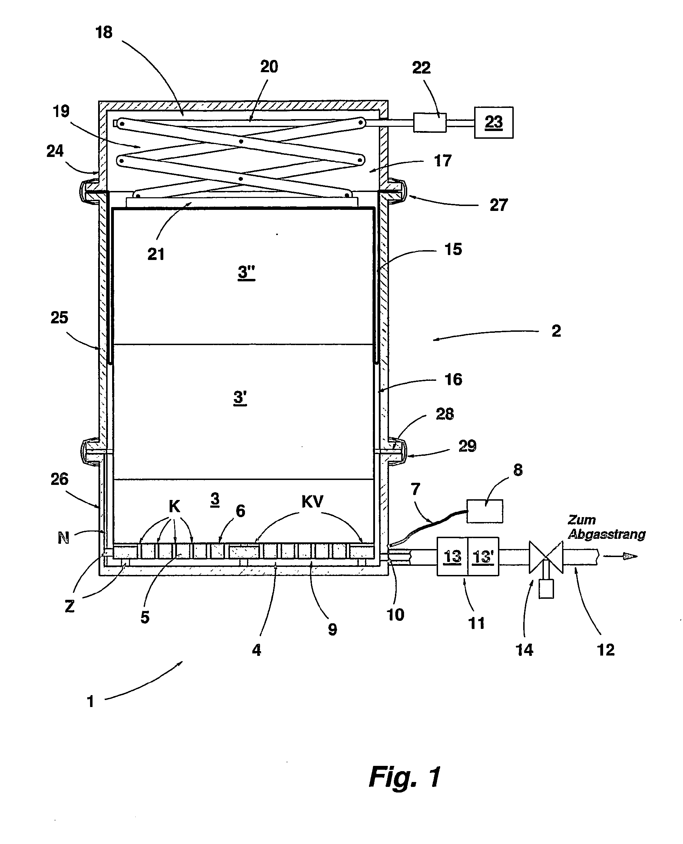

Eine Vorrichtung zum Zuführen von Ammoniak (NH₃) an einen in den Abgasstrang eines Dieselmotors eines Kraftfahrzeuges eingeschalteten Reduktionskatalysator ist in Figur 1 insgesamt mit den Bezugszeichen 1 gekennzeichnet. Diese Vorrichtung 1 umfasst einen Behälter 2 zum Erzeugen von Ammoniak (NH₃) durch thermolytisch Zersetzung eines NH₃-Precursors, wobei bei dem dargestellten Ausführungsbeispiels Ammoniumcarbamatpresslinge 3, 3', 3" als NH₃-Precursor eingesetzt sind. Die Ammoniumcarbamatpresslinge 3, 3', 3" sind scheibenförmige Körper und durch Pressen von pulverförmigem Ammoniumcarbamat in ihre in den Figuren gezeigte Form gebracht. Die Ammoniumcarbamatpresslinge 3, 3', 3" weisen eine runde Querschnittsfläche auf. In dem Behälter 2 sind drei Ammoniumcarbamatpresslinge 3, 3', 3" angeordnet, wobei von dem zu unterst liegenden Ammoniumcarbamatpresslingen 3 bereits eine gewisse Menge verbraucht worden ist. In dem Behälter 2 ist ferner eine insgesamt mit den Bezugszeichen 4 gekennzeichnete Heizeinrichtung angeordnet. Bei der Heizeinrichtung 4 handelt es sich um eine elektrische Widerstandsheizung, von der in Figur 1 die Heizplatte 5 im Querschnitt schematisiert und ohne die elektrischen Bestandteile gezeigt ist. Die in Figur 1 dargestellte obere Oberseite der Heizplatte 5 stellt bei diesem Ausführungsbeispiel die durch die Heizeinrichtung erwärmbare bzw. erwärmte Oberfläche 6 dar. Auf dieser Oberfläche 6 liegt die Unterseite des jeweils untersten Ammoniumcarbamatpresslings 3, 3' oder 3" an, je nachdem wieviel Ammoniumcarbamat durch den Betrieb der Vorrichtung 1 verbraucht ist. Die Heizplatte 5 ist in nicht näher dargestellter Weise über ein Anschlusskabel 7 und einen Steckverbinder 8 in ebenfalls nicht näher dargestellter Art und Weise an eine Steuereinheit angeschlossen. Über die Steuereinheit wird die Heizeinrichtung 4 angesteuert, wobei diese Ansteuerung durch ein getaktetes EIN- und AUS-Schalten und/oder auch durch Leistungsänderung erfolgen kann.

Die Heizplatte 5 der Heizeinrichtung 4 weist eine Vielzahl von diese durchbrechende Kanäle K, zweckmäßigerweise mit kreisrundem Querschnitt auf. Mehrere Kanäle K bilden jeweils eine Ringstruktur aus, so dass insgesamt die Kanäle K der Heizplatte 5 in mehreren konzentrisch zueinander angeordneten Ringstrukturen angeordnet sind. Zusätzlich sind in die Oberseite 6 der Heizplatte 5 kanalartige Vertiefungen KV eingebracht, die eine radiale Erstreckung aufweisen. Die Kanäle K und die kanalartigen Vertiefungen KV dienen als Wegsamkeit zur Verbindung der Oberseite 6 der Heizplatte 5 mit dem Ausgangsbereich 9 des Behälters 2. Der Ausgangsbereich 9 des Behälters 2 ist derjenige Bereich, von dem das durch Betrieb der Vorrichtung 1 erzeugte Reaktionsgas von dem Behälter 2 abgezogen werden kann. Dem Ausgangsbereich 9 ist daher auch der eigentliche Ausgang 10 des Behälters 2 zugeordnet. Der Ausgang 10 ist über eine Schnellkupplung 11 mit einer Zuführleitung 12 verbunden, die in den Abgasstrang des Dieselmotors in Strömungsrichtung des Abgases vor dem Reduktionskatalysator mündet. Bei der Schnellkupplung 11 handelt es sich um eine solche, bei der deren beide Kupplungsteile 13, 13' grundsätzlich gasdicht verschlossen sind. Diese öffnen erst, wenn beide Kupplungsteile 13, 13' bestimmungsgemäß abgedichtet miteinander verbunden sind. Eingeschaltet in die Zuführleitung 12 ist ein Magnetventil 14. Dieses ist bei dem in den Figuren dargestellten Ausführungsbeispiel in Strömungsrichtung des durch die Thermolyse gebildeten Reaktionsgases hinter der Kupplung 11 angeordnete.

In dem Behälter 2 ist ein Rollkolben 15 angeordnet, der das Behälterinnere in einen ersten Behälterabschnitt 16 und in einen zweiten Behälterabschnitt 17 unterteilt. Durch den Rollkolben 15 sind beide Behälterabschnitte 16, 17 gasdicht voneinander getrennt. In dem ersten Behälterabschnitt 16 befinden sich die Heizeinrichtung 4 und die Ammoniumcarbamatpresslinge 3, 3', 3" sowie der Ausgang 10. In dem anderen Behälterabschnitt 17 ist eine insgesamt mit den Bezugszeichen 18 gekennzeichnete Andrückeinrichtung enthalten, mit der die Ammoniumcarbamatpresslinge 3, 3', 3" zur Oberfläche 6 der Heizeinrichtung 4 hin unter Druck gesetzt werden. Dieses dient dem Zweck, dass die untere Oberfläche des zuunterst liegenden Ammoniumcarbamatpresslings 3 unter einer gewissen Vorspannung stehend auf der Oberseite 6 der Heizeinrichtung 4 anliegt, was die Reaktionsfreudigkeit der Vorrichtung 1 zum Bereitstellen der benötigten Reduktionsmenge (NH₃) unterstützt. Bei dem in Figur 1 dargestellten Ausführungsbeispiel ist als Andrückeinrichtung 18 eine mechanisch arbeitende eingesetzt. Diese umfasst eine Spreizschere 19, die durch eine Gewindespindel 20 antreibbar ist. Durch den Antrieb über die Gewindespindel 20 ist ein Spindeltrieb ausgebildet, wodurch dieser Antrieb selbsthemmend ist. Eine Rückstellung ist somit nur durch entsprechendes Antreiben der Gewindespindel 20 möglich. Die Spreizschere 19 verfügt an ihrem der Gewindespindel 20 gegenüberliegenden Ende über eine Andruckscheibe 21, die auf der Rückseite des Rollkolbens 15 und somit an der Oberseite des zu oberliegenden Ammoniumcarbamatpresslings 3' anliegt. Die Gewindespindel 20 ist aus dem Behälter 2 herausgeführt und über eine lösbare Kupplung 22 an einen Elektromotor 23 als Aktor angeschlossen. Der Elektromotor 23 ist in nicht näher dargestellter Art und Weise an eine Steuereinheit angeschlossen, über die eine Ansteuerung des Elektromotors 23 zum Betätigen der Andrückeinrichtung 18 erfolgt. Bei dieser Steuereinheit kann es sich auch um dieselbe Steuereinheit handeln, die eingesetzt wird, um die Heizeinrichtung 4 anzusteuern. Die Öffnung, durch die die Gewindespindel 20 aus dem Behälter 2 herausgeführt ist, dient gleichzeitig zur Belüftung des Behälterabschnittes 17.

Um jeweils einen gleichbleibenden Anpressdruck zwischen dem jeweils zu unterstliegenden Ammoniumcarbamatpressling 3, 3' bzw. 3" auf der Oberseite 6 der Heizeinrichtung 4 einstellen zu können, verfügt die Andrückeinrichtung 18 über Mittel, um den über die Andrückeinrichtung 18 ausgeübten Druck zu erfassen. Dies kann beispielsweise durch Auswerten von Kenndaten des Elektromotors 23, beispielsweise seiner Stromaufnahme erfolgen. Gleichfalls kann vorgesehen sein, zwischen der Andruckscheibe 21 und der Rückseite des Rollkolbens 15 einen Drucksensor einzusetzen, über den der von der Andrückeinrichtung 18 auf die Ammoniumcarbamatpresslinge 3, 3', 3" ausgeübte Druck erfassbar ist. Die Ausgangssignale eines solchen Drucksensors beaufschlagen die Steuereinheit zum Ansteuern des Elektromotors 23, so dass dieser entsprechend dem erfassten aktuellen Druck angesteuert werden kann.

Der Behälter 2 ist bei dem dargestellten Ausführungsbeispiel mehrteilig aufgebaut und umfasst einen oberen Deckelabschnitt 24, einen zylindrischen mittleren Abschnitt 25 und einen dem Ausgang zugehörigen Abschnitt 26. Der mittlere Abschnitt 25 ist durch jeweils eine Flanschverbindung mit dem Deckelabschnitt 24 bzw. mit dem unteren Abschnitt 26 verbunden. Zum Abdichten der Verbindung zwischen dem mittleren Abschnitt 25 und dem Deckelabschnitt 24 dient das Ende des Rollkolbens 15, das zwischen den zueinanderweisenden Flanschseiten eingespannt gehalten ist. Verschlossen ist die Verbindung zwischen dem mittleren Abschnitt 25 und dem Deckelabschnitt 24 durch einen Spannring 27. Die Verbindung zwischen dem mittleren Abschnitt 25 und dem unteren Abschnitt 26 ist entsprechend aufgebaut, wobei zur Abdichtung zwischen den zueinanderweisenden Flanschseiten ein Dichtring 28 eingesetzt ist. Auch diese Verbindung ist durch einen Spannring 29 gasdicht verschlossen. Die Spannringe 27, 29 sind so ausgelegt, dass diese sich nicht ohne weiteres öffnen lassen. Ein Öffnen des Behälters 2 ist von einem Benutzer der Vorrichtung 1 nicht vorgesehen. Der Behälter 2 ist als Wechselbehälter konzipiert. Nach Verbrauch des in dem Behälter 2 enthaltenen Ammoniumcarbamats wird dieser durch Lösen der Schnellkupplung 11, der Kupplung 22 und durch Abziehen des Steckverbinders 8 von den kraftfahrzeugseitigen Bestandteilen der Vorrichtung 1 gelöst und gegen einen Befüllten getauscht.

Die Andrückeinrichtung 18 wird bei dem dargestellten Ausführungsbeispiel ebenfalls eingesetzt, um die Heizeinrichtung 4 bestimmungsgemäß positioniert in dem Behälterabschnitt 16 zu halten. Die Heizeinrichtung 4 verfügt über an ihrer von der Oberfläche 6 gegenüberliegenden Seite und über radial angeordnete Zapfen Z zum Zentrieren der Heizplatte 5 in dem Behälter 2 und zum Beabstanden derselben von dem unteren Abschluss des Behälters 2. Die an der der Oberfläche 6 gegenüberliegenden Seite angeformten Zapfen Z dienen zum Bereitstellen des Ausgangsbereiches 9, der als Sammler für das durch die Kanäle K und die kanalartigen Vertiefungen KV herangeführte Reaktionsgas dient. Durch den über die Andrückeinrichtung 18 auf die Ammoniumcarbamatpresslinge 3, 3, 3" ausgeübten Druck wird ebenfalls die Heizplatte 5 in ihrer in den Figuren gezeigten Position gehalten. In die Innenseite des unteren Abschnittes 26 des Behälters 2 ist eine Nut N eingebracht der Heizplatte 5, in die einer der radial abragenden Zapfen Z zum codierten Einsetzen und zum Bereitstellen einer Verdrehsicherung eingreift, wie dies in Figur 1 dargestellt ist.

Bei einem Betrieb des Dieselmotors wird auf direkte oder indirekte Weise der NOx-Gehalt des Abgases bestimmt, um in Abhängigkeit von diesem Wert über die Vorrichtung 1 eine bestimmte NH₃-Menge als Teil des durch die Thermolyse gebildeten Reaktionsgases vor dem Reduktionskatalysator in den Abgasstrang einzubringen, damit eine ausreichende NH₃-Menge zur Reduktion der im Abgasstrom enthaltene Stickoxide zur Verfügung steht. Solange die Vorrichtung 1 außer Betrieb ist, ist das Magnetventil 14 geschlossen. Mit der Ansteuerung der Heizeinrichtung 4 zum thermolytischen Zersetzen von Ammoniumcarbamat zum Erzeugen des benötigten NH₃ wird das Magnetventil 14 geöffnet. Die Heizeinrichtung 4 ist ausgelegt, damit die Oberseite 6 des Heizelementes 5 rasch, zweckmäßigerweise quasi spontan ihre Betriebstemperatur hat, so dass das unter dem Druck der Andrückeinrichtung 18 an dieser Oberseite 6 anliegende Ammoniumcarbamat des Ammoniumcarbamatpresslings 3 (vgl. Figur 1) thermolytisch zersetzt wird. Diese thermolytische Zersetzung hat einen Druckaufbau in dem unteren Behälterabschnitt 16 zur Folge. Da durch die geöffnete Schnellkupplung 11 und das geöffnete Magnetventil 14 eine unmittelbare Verbindung zwischen dem Behälterabschnitt 16 und dem Abgasstrang besteht, besteht zum Abgasstrang hin ein Druckunterschied, so dass das an der Oberfläche 6 gebildete Reaktionsgas unterstützt durch die geschaffenen Wegsamkeiten der Kanäle K sowie der kanalartigen-Vertiefung KV in den als Sammler dienenden ausgangsseitigen Bereich 9 des Behälters 2 und durch den Ausgang 10 in den Abgasstrang wegströmen kann. Die Dimensionierung der zum Wegführen des gebildeten Reaktionsgases notwendigen Wegsamkeiten bilden einen möglichst geringen Gegendruck aus. Dies kann beispielsweise durch entsprechend große Strömungsquerschnitte erreicht werden.

Bei dem vorbeschriebenen Verfahren wird somit das gebildete Reaktionsgas ohne eine Speicherung dem Abgasstrang zugeführt. Ebenfalls ist ein Druckaufbau in dem unteren Behälterabschnitt 16 durch die bei einer Bestromung der Heizeinrichtung 4 einsetzende Thermolyse nicht gegeben. Das Magnetventil 14 wird erst nach dem Ausschalten der Heizeinrichtung 4 geschlossen.

Durch das unmittelbare Angrenzen der Unterseite des Ammoniumcarbamatpresslings 3 auf der Oberseite 6 der Heizplatte 5 ist eine sehr rasche Erwärmung des Ammoniumcarbamats gegeben, da lediglich ein einziger Wärmeübergang überwunden werden muss, und zwar derjenige von dem Heizelement 5 auf das Ammoniumcarbamat. Begünstigt wird dieser Wärmeübergang durch den von der Andrückeinrichtung 18 bereitgestellten Anpressdruck mit dem der Ammoniumcarbamatpressling 3 mit seiner Unterseite auf der Oberseite 6 der Heizplatte 5 anliegt. Dieses hat auch zur Folge, dass der Ammoniumcarbamatpressling 3 immer mit einer glatten Unterseite an die Oberseite 6 der Heizplatte 5 grenzt. Gegebenenfalls bei der Herstellung des Presslings 3, 3', 3" vorhandene oder bei seiner späteren Handhabung gebildete Oberflächenunebenheiten werden, wenn diese unregelmäßige Oberfläche in Kontakt mit der Oberseite 6 der Heizplatte 5 bei einem Betrieb der Heizeinrichtung 4 kommt, egalisiert.

Infolge der thermolytischen Zersetzung des Ammoniumcarbamats an der Oberseite 6 der Heizplatte 4 und dem weggeführten Gas reduziert sich der durch die Andrückeinrichtung 18 zunächst bereitgestellte Anpressdruck. Dieser Ammoniumcarbamatverbrauch ist beispielsweise durch den Drucksensor zwischen der Andrückplatte 16 und der Rückseite des Rollkolbens 15 detektierbar, so dass durch den detektierten Druckabfall der Elektromotor 23 zum Antreiben der Gewindespindel 20 und zum Spreizen der Schere 19 solange angesteuert wird, bis der gewünschte Anpressdruck wiederhergestellt ist. Durch die Andrückeinrichtung 18 des dargestellten Ausführungsbeispiels ist es ebenfalls möglich, an diese einen Wegaufnehmer zu koppeln, um über diesen auf den aktuellen Ammoniumcarbamatvorrat in dem Behälter 2 schließen zu können. Zu diesem Zweck können diskrete Sensoren eingesetzt werden; gleichfalls ist es möglich, eine Wegaufnahme durch Auswerten von Kenndaten des Elektromotors zur Errechnung des zurückgelegten Weges zu erfassen. Handelt es sich bei dem Elektromotor 23 um einen kommutierten Gleichstrommotor, kann eine Wegaufnahme bzw. eine Positionsbestimmung der Andrückscheibe 21 über eine Erfassung der Stromrippel (rippel counting) erfolgen.

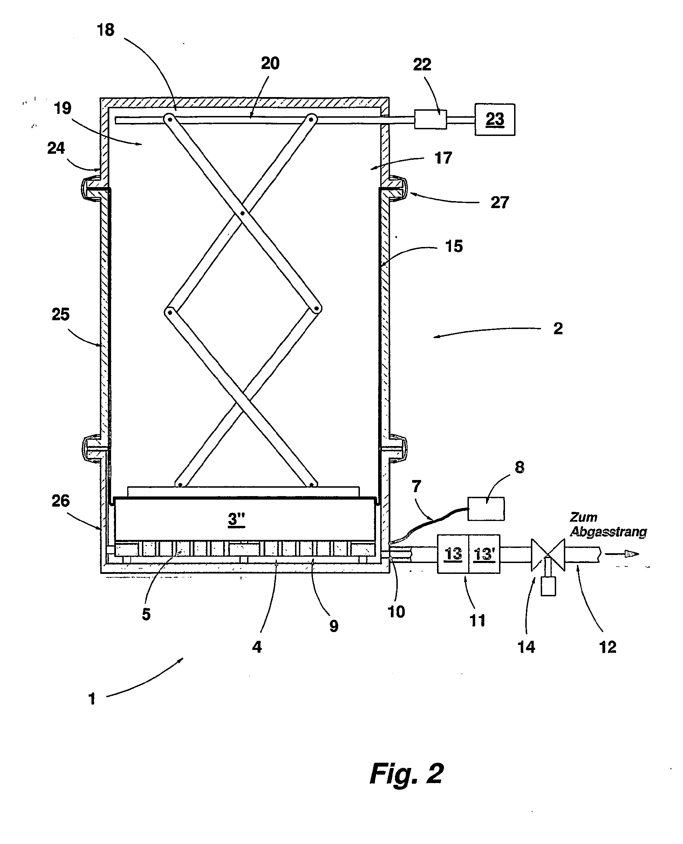

Figur 2 zeigt die Vorrichtung der Figur 1 mit einem weitgehend verbrauchtem Ammoniumcarbamatvorrat. Die Ammoniumcarbamatpresslinge 3, 3' sind verbraucht; es liegt nunmehr der Rest des Ammoniumcarbamatpresslings 3" auf der Oberseite 6 der Heizplatte 5 an. Die Spreizschere 19 ist weitgehend ausgefahren und beaufschlagt die Rückseite des Ammoniumcarbamatpresslings 3" nach wie vor mit dem gewünschten Anpressdruck.

Der Behälter 2 der Vorrichtung 1 ist in einer dem Kraftfahrzeug zugeordneten Wechselstation aufgenommen. Dabei sind die jeweiligen Schnittstellen zwischen dem Behälter und dem kraftfahrzeugseitigen Bestandteilen der Vorrichtung dergestalt konzipiert, dass beim Einsetzen bzw. Herausnehmen des Behälter 2 aus einer solchen Station die notwendigen Verbindungs- und/oder Versorgungsleitungen selbsttätig zusammengeführt bzw. hergestellt werden.

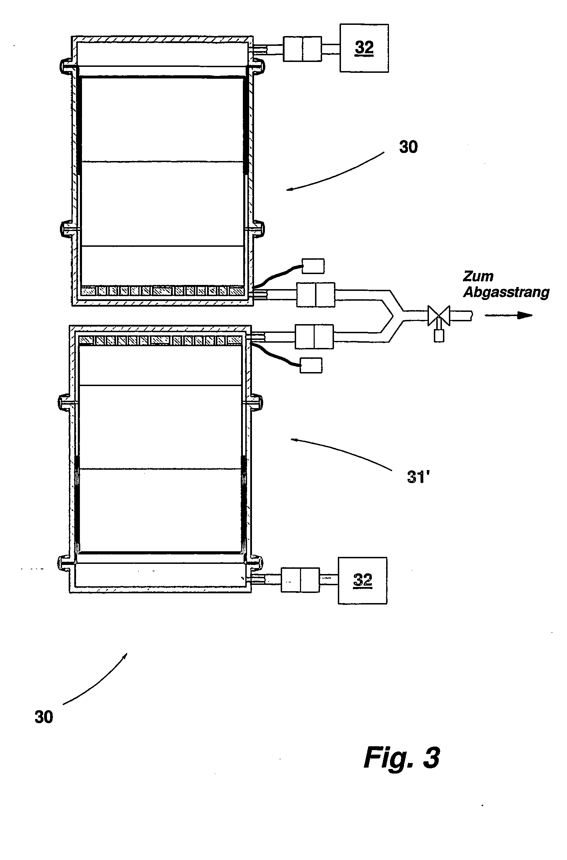

Figur 3 zeigt ein weiteres Ausführungsbeispiel des Gegenstands der Erfindung. Bei dieser Vorrichtung 30 zum Zuführen von Ammoniak an einen in den Abgasstrang eines Dieselmotors eingeschalteten Reduktionskatalysator sind zwei Behälter 31, 31' vorgesehen, in denen eine Thermolyse von Ammoniumcarbamat erfolgt. Die Behälter 31, 31' sind grundsätzlich aufgebaut wie der zu dem vorangegangenen Ausführungsbeispiel beschriebene Behälter 2. Im Unterschied zu dem Behälter 2 sind die Behälter 31, 31' mit ihrem der jeweiligen Heizeinrichtung gegenüberliegenden Behälterabschnitt an das Druckluftsystem des Lastkraftwagens angeschlossen, in dem diese Vorrichtung 30 eingesetzt ist. Das Druckluftsystem ist mit dem Bezugszeichen 32 in Figur 3 gekennzeichnet. Über das Druckluftsystem 32, zu dem ebenfalls ein Kompressor zum Bereitstellen des notwendigen Luftdruckes in dem System gehörig ist, wird dieser hintere Behälterabschnitt mit dem zum Bereitstellen eines Anpressdruckes zwischen dem Ammoniumcarbamat und der zum Ammoniumcarbamat weisenden Seite der Heizelemente beaufschlagt. Angeschlossen ist dieser Behälterabschnitt zweckmäßigerweise an den Drucklufttank des Druckluftsystems 32.

Bei der Vorrichtung 30 sind zwei Behälter 31, 31' eingesetzt, die jeweils über eine eigene Heizeinrichtung verfügen. Die Heizeinrichtungen der beiden Behälter 31, 31' sind unabhängig voneinander ansteuerbar und können somit einzeln oder gemeinsam oder auch mit unterschiedlicher Leistung angesteuert werden, um dem Bedarf an NH₃ bei einem bestimmten Lastzustand des Dieselmotors, insbesondere bei einem raschen Lastwechsel gerecht zu werden. Die Heizeinrichtungen sind zu diesem Zweck an eine gemeinsame Steuereinheit angeschlossen.

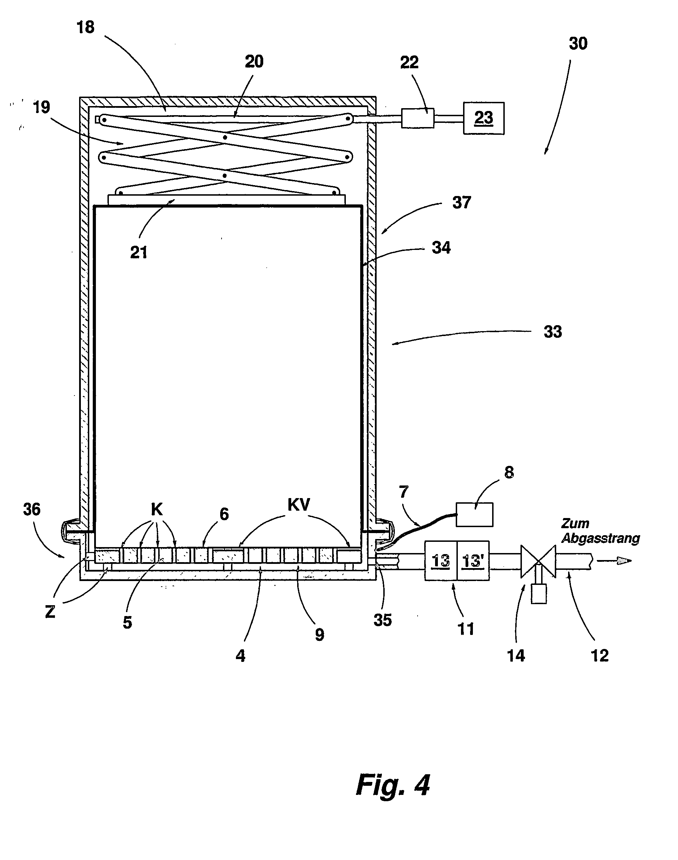

Figur 4 zeigt in einer weiteren Ausgestaltung einen Behälter 33, der grundsätzlich aufgebaut ist wie der Behälter 2 der Vorrichtung 1. Aus diesem Grunde sind gleiche Elemente mit gleichen Bezugszeichen gekennzeichnet. Im Unterschied zu dem Behälter 2 der Vorrichtung 1 ist bei dem Behälter 33 der Rollkolben 34 im Bereich des Ausgangs 35 des Behälter 33 gehalten. Der Behälter 33 verfügt lediglich über eine Schnittstelle, durch den der Behälter 33 in die beiden Behälterteile 36 und 37 geteilt ist. Der Vorteil dieser Konzeption liegt darin, dass der in dem Behälter 2 verbleibende Raum auf ein Minimum reduziert und dass der Behälter 2 grundsätzlich nur eine Schnittstelle aufweisen muss. Somit ist in dem Behälter auch der Raum auf ein Minimum reduziert, in dem sich bei einem Abkühlen des Behälter 2 aus dem gebildeten Reaktionsgas Ammoniumcarbamat zurückbilden kann.

Anstelle der in Figur 3 beschriebenen Vorrichtung 30 kann auch eine solche konzipiert sein, bei der ein einziger Behälter eingesetzt wird, dessen Heizeinrichtung entweder eine einzige Heizplatte mit zwei einander gegenüberliegenden Heizflächen oder auch zwei einzelne, insbesondere auch unabhängig voneinander ansteuerbare Heizplatten aufweist. Zum Bereitstellen eines möglicherweise gewünschten Anpressdruckes des Ammoniumcarbamats auf der jeweiligen erwärmten Oberfläche ist dieser Behälter mit zwei Kolben, zweckmäßigerweise als Rollkolben ausgebildet, ausgestattet.

Von Vorteil bei einer Anordnung von zwei oder auch mehreren Behältern als Teil einer vorbeschriebenen Vorrichtung ist, dass nicht nur Spitzenbedarfe des benötigten NH₃ bereitgestellt werden können, sondern insbesondere lässt sich auf diese Art und Weise auch ein in einem Kraftfahrzeug zur Verfügung stehender Einbauraum effektiver ausnutzen. Für den Fall, dass die Behälter als Wechselbehälter ausgebildet sind, sind diese naturgemäß bei Einsatz von mehreren Behältern kleiner und somit auch leichter, so dass grundsätzlich deren Handhabung vereinfacht ist.

Anstelle der beschriebenen Andrückeinrichtung, die mechanisch wirkend als Spreizschere beschrieben ist, können ebenfalls andere Einrichtungen zum Einsatz gelangen, wie beispielsweise Spindeln, insbesondere Teleskopspindeln oder dergleichen.

In einem weiteren, in den Figuren nicht dargestellten Ausführungsbeispiel ist das Magnetventil dem Behälter zugeordnet und mit der Heizeinrichtung in wärmeleitender Verbindung gehalten. Bei dieser Ausgestaltung wird die durch die Heizeinrichtung bei ihren Betrieb bereitgestellte Wärme ausgenutzt, um bei einem Betriebsstillstand gegebenenfalls aus dem Reaktionsgasgemisch zurückgebildetes Ammoniumcarbamat, das sich in dem Magnetventil abgelagert hat, erneut thermolytisch zu zersetzen und somit die Betriebsfähigkeit des Magnetventils in jedem Falle sicherzustellen.

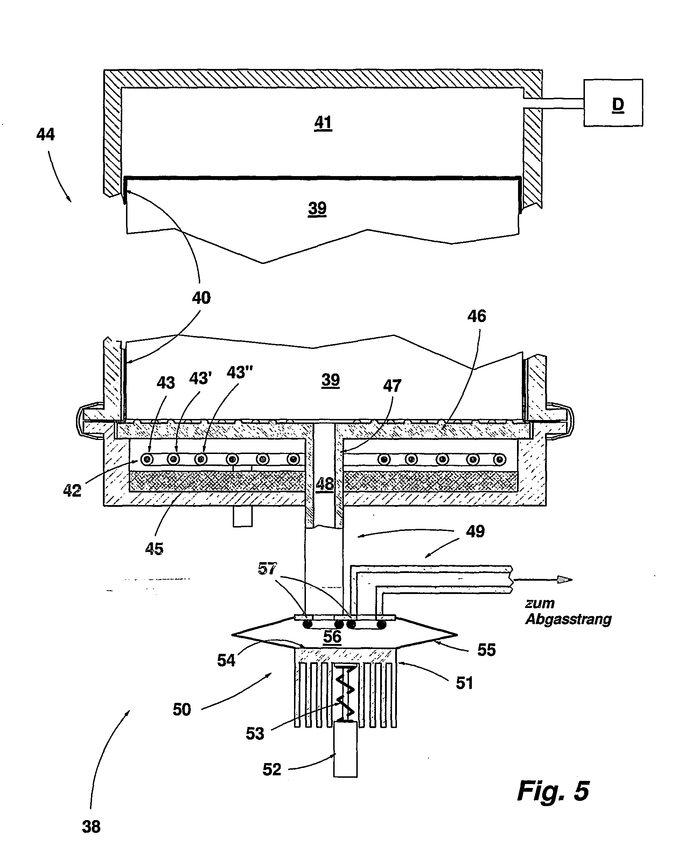

Eine weitere Vorrichtung 38 zum Zuführen von Ammoniak (NH₃) an einen in den Abgasstrang eines Dieselmotors eines Kraftfahrzeuges eingeschalteten Reduktionskatalysator ist in Figur 5 dargestellt. Die Vorrichtung 38 arbeitet ebenso wie die vorbeschriebenen Vorrichtungen 1, 30, wobei zur Andruckbeaufschlagung des NH₃-Precursors 39 der durch den Rollkolben 40 abgetrennte Behälterteil 41 an eine Druckluftversorgungseinrichtung D angeschlossen ist. Neben dem Precursor 39 befindet sich auf dieser Seite des Rollkolbens 40 ebenfalls eine insgesamt mit den Bezugszeichen 42 gekennzeichnete Heizeinrichtung. Die Heizeinrichtung 42 umfasst eine Strahlungsheizung. Die Strahlungsheizung ist bei dem dargestellten Ausführungsbeispiel aus drei einzelnen, jeweils eine archimedische Spirale darstellenden, verschachtelt zueinander angeordneten Heizelementen 43, 43', 43" gebildet. Die einzelnen Heizelemente 43, 43', 43" der Heizeinrichtung 42 sind unabhängig voneinander ansteuerbar, so dass in Abhängigkeit von der Anzahl der jeweils bestromten Heizelemente 43, 43', 43" die produzierte Wärmeleistung und/oder auch der Verlauf einer Erwärmungsphase gesteuert werden kann. Die Heizeinrichtung 42 befindet sich in einem unteren Behälterteil des mit dem Bezugszeichen 44 gekennzeichneten Behälters der Vorrichtung 38. Unterhalb der Heizelemente 43, 43', 43" ist eine Wärmedämmung 45. Oberhalb und mit geringem Abstand zu der Strahlungsheizung befindet sich eine Heizplatte 46 als weiterer Teil der Heizeinrichtung 42. Die Heizplatte 46 besteht bei dem dargestellten Ausführungsbeispiel aus einem durchsichtigen glaskeramischen Werkstoff, der durchlässig ist für die durch die Heizeinrichtung 42 erzeugte Wärmestrahlung. Die zu dem Ammoniumcarbamatpressling 39 weisende Seite der Heizplatte 46 ist durch Noppen oberflächenstrukturiert. An die Heizplatte 46 ist zum unteren Abschluss des Behälters weisend ein Rohrstück 47 angeformt. Dieses schließt einen Anschlusskanal 48 ein. Der Anschlusskanal 48 ist an eine insgesamt mit den Bezugszeichen 49 bezeichnete Zuführleitung angeschlossen. Letztendlich bildet der Anschlusskanal 48 einen Teil der Zuführleitung 49.

Figur 5 zeigt die Vorrichtung 38 und insbesondere den Behälter 44 mit dem darin befindlichen Ammoniumcarbamatpressling 39 vor einer ersten Inbetriebnahme. Aus diesem Grunde liegt die untere Stirnseite des Ammoniumcarbamatpresslings 39 auf der Oberseite der Noppenstruktur der Heizplatte 46 an. Nach einer ersten Inbetriebnahme der Vorrichtung 38 durch Ansteuern der Heizeinrichtung 42 wird sich von der Stirnseite des Ammoniumcarbamatpresslings 39 eine gewisse Menge thermolytisch zersetzt haben. Dies hat zur Folge, dass sich die Noppen in den Ammoniumcarbamatpressling 39 eindrücken und diesen fixieren.

Die Heizeinrichtung 42 ist so ausgelegt, dass an der zum Ammoniumcarbamatpressling 39 weisenden Seite der Heizplatte 46 maximal nur solche Temperaturen entstehen, die kleiner sind als die Zersetzungstemperatur des bei der Thermolyse des Ammoniumcarbamats gebildeten Reaktionsgases bzw. -gemisches. Dieses wird nicht unmaßgeblich durch die glaskeramische Heizplatte 46 erreicht. Daher werden bei der Heizeinrichtung 42 die Vorteile einer Strahlungsheizung hinsichtlich einer raschen Reaktionsfähigkeit und der damit verbundenen Spontanzersetzung von Ammoniumcarbamat mit Vorteilen derjenigen Heizeinrichtungen verbunden, die sich beispielsweise bei Einsatz einer Kontaktheizung einstellen.

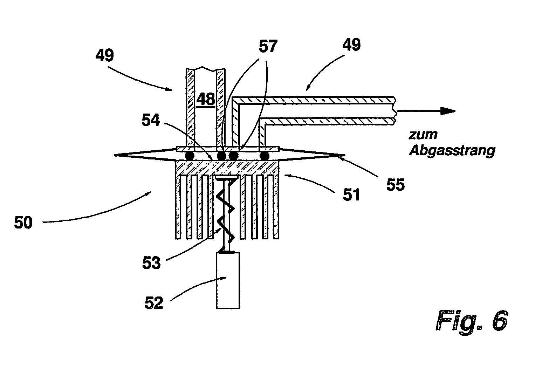

In die Zuführleitung 49 ist ein Ventil 50 eingeschaltet. Das Ventil 50 ist in Figur 5 in seiner Offenstellung gezeigt. Das Ventil 50 umfasst als bewegliches Element ein Peltier-Element 51, das über ein Stellglied 52 in seine Offenstellung gebracht werden kann. Bei dem Stellglied 52 kann es sich beispielsweise um einen Elektromagneten handeln. In seine in Figur 6 gezeigte Geschlossenstellung ist das Ventil 50 durch Bewegen des Peltier-Elementes 51 durch die in der Kraft einer Druckfeder 53 gespeicherte Energie bringbar. Das Peltier-Element 51 bildet mit seiner Oberfläche 54 die Ventilfläche und somit das Stellelement des Ventils 50. Eine Membran 55 dichtet den Ventilraum 56 in der in Figur 5 gezeigten geöffneten Stellung des Ventils 50 umfänglich ab.

In der Offenstellung des Ventils 50 strömt durch Thermolyse an dem Peltier-Element 51 gebildetes Reaktionsgas durch den Ventilraum 56 in die weitere Zuführleitung 49, mit der das gebildete Reaktionsgasgemisch dem Abgasstrang zugeführt wird. Wird das Ventil 50 geschlossen, wie dies in Figur 6 gezeigt ist, erfolgt gleichzeitig eine Bestromung des Peltier-Elements 51 zum Kühlen seiner Oberseite 54. Durch das Anliegen der Oberseite 54 des Peltier-Elements 51 an den Anschlusskanal 48 abdichtenden Dichtungen 57 - dem Ventilsitz - und durch den durch die Kühlung eintretenden Kondensator-Effekt, wird in den beiden Ästen der Zuführleitung befindliches Reaktionsgas zu der dann kalten Oberseite 54 geführt, die in dieser Situation als Kühlfalle dient. Somit werden die Leitungen durch diese Kühlfalle nach Abschalten der Heizeinrichtung 42 freigehalten, so dass die Gefahr einer Rückbildung von Ammoniumcarbamat aus dem gebildeten Reaktionsgas innerhalb der Zuführleitung 49 weitestgehend vermieden ist. Beim Öffnen oder auch kurz vor dem Öffnen des Ventils 50 wird das Peltier-Element 51 dergestalt bestromt, damit dieses als Heizelement dient, wodurch sich das infolge der Kühlfallenfunktion gebildete Ammoniumcarbamat zersetzt und anschließend das Ventil 50 bestimmungsgemäß gängig und somit bewegbar und funktionstüchtig ist.

Ammoniumcarbamat ist zum Betreiben der beschriebenen Vorrichtung das bevorzugte NH₃-Precursormaterial. Vorteilhaft bei Einsatz von Ammoniumcarbamat ist, dass seine thermolytische Zersetzung in nennenswertem Umfange bereits bei Temperaturen oberhalb von 70°C einsetzt. Diese relativ niedrige Thermolysetemperatur hat auch zum Vorteil, dass durch das zweckmäßigerweise auf eine höhere Temperatur erwärmte Reaktionsgas ohne weiteres im ausgangsseitigen Bereich des Behälters und/oder in der Zuführleitung und/oder in in die Zuführleitung eingeschalteten Ventilen oder dergleichen ggf. zurückgebildetes Ammoniumcarbamat bei einer Inbetriebnahme der Vorrichtung thermolytisch zersetzt und somit aufgelöst wird und auf diese Weise die für die Zuführung des Reaktionsgases notwendigen Wegsamkeiten freigespült werden.

Aus der Beschreibung der Erfindung wird deutlich, dass mit den beschriebenen Vorrichtungen mit einem Minimum an Hardware-Aufwand eine just-in-time-Produktion von NH₃ aus einem NH₃-Precursor, insbesondere Ammoniumcarbamat möglich ist und dieses auch in einer solchen Menge möglich ist, dass eine wirksame Stickoxidreduktion an den Reduktionskatalysator auch dann vorgenommen werden kann, wenn die Brennkraftmaschine, beispielsweise der Dieselmotor auch über längerer Zeit unter Volllast betrieben wird. Ausgenutzt werden kann bei einem Betrieb dieser Vorrichtung vorteilhafterweise auch die Speicherfähigkeit des Reduktionskatalysators hinsichtlich des Reduktionsmittels (NH₃).

### Bezugszeichenliste

- 1: Vorrichtung
- 2: Behälter
- 3, 3', 3": Ammoniumcarbamatpressling
- 4: Heizeinrichtung
- 5: Heizplatte
- 6: Oberfläche
- 7: Anschlusskabel
- 8: Steckverbinder
- 9: Ausgangsbereich
- 10: Ausgang
- 11: Schnellkupplung
- 12: Zuführleitung
- 13, 13': Kupplungsteil
- 14: Magnetventil
- 15: Rollkolben
- 16: erster Behälterabschnitt
- 17: zweiter Behälterabschnitt
- 18: Andrückeinrichtung
- 19: Spreizschere
- 20: Gewindespindel
- 21: Andruckscheibe
- 22: Kupplung
- 23: Elektromotor
- 24: Deckelabschnitt
- 25: mittlerer Abschnitt
- 26: Abschnitt
- 27: Spannring
- 28: Dichtring
- 29: Spannring
- 30: Vorrichtung
- 31, 31': Behälter
- 32: Druckluftsystem
- 33: Behälter
- 34: Rollkolben
- 35: Ausgang
- 36: Behälterteil
- 37: Behälterteil
- 38: Vorrichtung
- 39: Ammoniumcarbamatpressling
- 40: Rollkolben
- 41: Behälterbereich
- 42: Heizeinrichtung
- 43, 43', 43": Heizelement
- 44: Behälter
- 45: Wärmedämmung
- 46: Heizplatte
- 47: Rohrstück
- 48: Anschlusskanal
- 49: Zuführleitung
- 50: Ventil
- 51: Peltier-Element
- 52: Stellglied
- 53: Druckfeder
- 54: Oberseite
- 55: Membran
- 56: Ventilraum
- 57: Dichtring

- D: Druckluftversorgungseinrichtung
- K: Kanal
- KV: kanalartige Vertiefung
- N: Nut
- Z: Zapfen

## Patentansprüche

1. Vorrichtung zum Zuführen von Ammoniak (NH₃) in gasförmiger Phase an einen in den Abgasstrang einer Brennkraftmaschine, insbesondere eines Dieselmotors eingeschalteten Reduktionskatalysator, umfassend einen ausgangsseitig mit dem Abgasstrang über eine Zuführleitung (12, 49) verbundenen Behälter zum Bevorraten eines unter Wärmezufuhr NH₃ abspaltenden Precursors (3, 3', 3"; 39), etwa Ammoniumcarbamat sowie umfassend eine Heizeinrichtung (4, 42) zum Herbeiführen einer thermolytischen NH₃-Abspaltung des NH₃-Precursors (3, 3', 3"; 39), **dadurch gekennzeichnet, dass** die Vorrichtung (1, 30, 38) eine in dem Behälter (2; 31, 31'; 33; 44) angeordnete, an eine Steuereinheit angeschlossene elektrische Heizeinrichtung (4, 42) umfasst und dass die Heizeinrichtung (4, 42) und der NH₃-Precursor (3, 3', 3"; 31; 39) in dem Behälter (2, 44) dergestalt zueinander angeordnet ist, dass eine Erwärmung des NH₃-Precursors (3, 3', 3"; 39) zur thermolytischen NH₃-Abspaltung durch einen unmittelbaren Wärmeübergang von zumindest einer erwärmten Oberfläche (6) der-Heizeinrichtung (4, 42) auf den NH₃-Precursor (3, 3', 3"; 33; 39) erfolgt.

2. Vorrichtung nach Anspruch 1, **dadurch gekennzeichnet, dass** der in dem Behälter (2, 44) enthaltene NH₃-Precursor ein Feststoff, insbesondere eine stabförmiger Pressling (3, 3', 3"; 33; 39) ist.

3. Vorrichtung nach Anspruch 2, **dadurch gekennzeichnet, dass** der Feststoff druckbeaufschlagt an der zumindest einen erwärmten Oberfläche (6) der Heizeinrichtung (4, 42) anliegt.

4. Vorrichtung nach Anspruch 3, **dadurch gekennzeichnet, dass** der Behälter (2) durch einen Kolben in zwei gasdicht zueinander getrennte Behälterabschnitte (16, 17) geteilt ist, wobei in dem einen Behälterabschnitt (16) der NH₃-Precursor (3, 3', 3") und die Heizeinrichtung (4) und in dem anderen Behälterabschnitt (17) eine mechanisch auf den NH₃-Precursor (3, 3', 3") arbeitend ausgelegte Andrückeinrichtung (18) angeordnet ist.

5. Vorrichtung nach Anspruch 4, **dadurch gekennzeichnet, dass** ein Aktor zum Antreiben der Andrückeinrichtung (18), beispielsweise ein Elektromotor (23), außerhalb des Behälters (2) angeordnet und über eine lösbare Kupplung (22) an die im Behälter (2) befindliche Andrückeinrichtung (18) angeschlossen ist.

6. Vorrichtung nach Anspruch 3, **dadurch gekennzeichnet, dass** der Behälter (33, 44) durch einen Kolben in zwei gasdicht voneinander getrennte Behälterabschnitte (16, 17) geteilt ist, wobei in dem einen Behälterabschnitt (16) der NH₃-Precursor (3, 3', 3"; 39) und die Heizeinrichtung (4, 42) angeordnet sind und der andere Behälterabschnitt mit einem unter Druck stehenden Gas, beispielsweise Stickstoff befüllt ist.

7. Vorrichtung nach Anspruch 4 bis 6, **dadurch gekennzeichnet, dass** der Kolben ein Rollkolben (15) ist.

8. Vorrichtung nach einem der Ansprüche 1 bis 7, **dadurch gekennzeichnet, dass** die Heizeinrichtung (4, 42) eine im Bereich des in die Verbindungsleitung (12, 49) mündenden Ausgang des Behälters (2, 33, 44) angeordnete Heizplatte (5; 46) umfasst, an deren einer Oberfläche (6) der NH₃-Precursor (3, 3', 3"; 39) anliegt.

9. Vorrichtung nach Anspruch 8, **dadurch gekennzeichnet, dass** an der von dem NH₃-Precursor (39) wegweisenden Seite der Heizplatte (46) der Heizeinrichtung (42) eine elektrische Strahlungsheizung (43, 43', 43") angeordnet ist.

10. Vorrichtung nach Anspruch 8 oder 9, **dadurch gekennzeichnet, dass** die zum NH₃-Precursor (39) weisende Seite der Heizplatte (46) eine noppenartige Oberflächenstrukturierung aufweist.

11. Vorrichtung nach Anspruch 9 oder 10, **dadurch gekennzeichnet, dass** die Heizplatte (46) aus einem transparenten oder transluzenten glaskeramischen Werkstoff besteht.

12. Vorrichtung nach einem der Ansprüche 1 bis 11, **dadurch gekennzeichnet, dass** der Behälter (2, 44) mit seinem Inhalt von den übrigen Bestandteilen der Vorrichtung (1, 38) lösbar ist und der Ausgang des Behälters (2) mittels einer Kupplung (13) an die Zuführleitung (12, 49) angeschlossen ist.

13. Vorrichtung nach einem der Ansprüche 1 bis 12, **dadurch gekennzeichnet, dass** die Heizeinrichtung mehrere unabhängig voneinander ansteuerbare Heizelemente umfasst und dass jedem Heizelement ein eigener NH₃-Precursorvorrat zugeordnet ist.

14. Vorrichtung nach einem der Ansprüche 1 bis 13, **dadurch gekennzeichnet, dass** die Vorrichtung (30) mehrere Behälter (31, 31') mit jeweils einer Heizeinrichtung umfasst.

15. Vorrichtung nach einem der Ansprüche 1 bis 14, **dadurch gekennzeichnet, dass** in die Zuführleitung (49) ein ansteuerbares Ventil (50) eingeschaltet ist.

16. Vorrichtung nach Anspruch 15, **dadurch gekennzeichnet, dass** die mit dem feststehenden Ventilsitz (57) zusammenwirkende bewegliche Ventilfläche (54) des Ventils (50) die wärmetauschende Oberfläche eines Peltier-Elements (51) ist.

## Claims

1. Device for supplying ammonia (NH₃) in gaseous phase to a reduction catalyst connected into the exhaust duct of an internal combustion engine, in particular a diesel engine, said device comprising a container connected on the output side to the exhaust duct via a supply line (12, 49) for storing a precursor (3, 3', 3"; 39) that separates off NH₃ when heat is added, for instance ammonium carbonate, and comprising a heating device (4, 42) for producing a thermolytic separating off of NH₃ of the NH₃ precursor (3, 3', 3"; 39), **characterized in that** the device (1, 30, 38) includes a heating device (4, 42), which is positioned in the container (2; 31, 31': 33, 44) and is connected to a control unit, and **in that** the heating device (4, 42) and the NH₃ precursor (3, 3', 3"; 39) are positioned in the container (2, 44) one relative to the other in such a manner that a heating of the NH₃ precursor (3, 3', 3"; 39) for the thermolytic separating off of NH₃ is effected by means of a direct transfer of heat from at least one heated surface (6) of the heating device (4, 42) to the NH₃ precursor (3, 3', 3"; 39).

2. Device according to Claim 1, **characterized in that** the NH₃ precursor contained in the container (2, 44) is a solid, in particular a rod-shaped pressed part (3, 3', 3"; 33; 39).

3. Device according to Claim 2, **characterized in that** the solid abuts against the at least one heated surface (6) of the heating device (4, 42) impinged upon with pressure.

4. Device according to Claim 3, **characterized in that** the container (2) is divided by a piston into two separate container sections (16, 17) that are gas-tight one relative to the other, wherein the NH₃ precursor (3, 3', 3") and the heating device are positioned in the one container section (16) and a pressing device (18) that is designed to act on the NH₃ precursor mechanically is positioned in the other container section (17).

5. Device according to Claim 4, **characterized in that** an actuator for driving the pressing device (18), for example an electric motor (23), is positioned outside the container (2) and is connected to the pressing device (18) that is located in the container (2) by means of a detachable coupling (22).

6. Device according to Claim 3, **characterized in that** the container (33, 44) is divided by a piston into two container sections (16, 17) that are separated in a gas-tight manner from one another, wherein the NH₃ precursor (3, 3', 3"; 39) and the heating device are positioned in the one container section (16) and the other container section is filled with a pressurized gas, for example nitrogen.

7. Device according to Claim 4 to 6, **characterized in that** the piston is a rolling piston (15).

8. Device according to one of Claims 1 to 7, **characterized in that** the heating device (4, 42) includes a heating plate (5; 46) that is positioned in the region of the outlet of the container (2, 33, 44) that opens out into the connecting line (12, 49), the NH₃ precursor (3, 3', 3"; 39) abutting against the one surface (6) of said heating plate.

9. Device according to Claim 8, **characterized in that** an electric radiation heating means (43, 43', 43") is positioned on the side of the heating plate (46) of the heating device (42) remote from the NH₃ precursor (39).

10. Device according to Claim 8 or 9, **characterized in that** the side of the heating plate (46) facing the NH₃ precursor (39) has a knob-like surface structure.

11. Device according to Claim 9 or 10, **characterized in that** the heating plate (46) is produced from a transparent or translucent glass-ceramic material.

12. Device according to one of Claims 1 to 11, **characterized in that** the container (2, 44) with its contents is detachable from the remaining components of the device (1, 38) and the output of the container (2) is connected to the supply line (12, 49) by means of a coupling (13).

13. Device according to one of Claims 1 to 12, **characterized in that** the heating device includes a plurality of heating elements that are actuatable independently of one another and **in that** a specific NH₃ precursor store is associated with each heating element.

14. Device according to one of Claims 1 to 13, **characterized in that** the device (30) includes a plurality of containers (31, 31') each with a heating device.

15. Device according to one of Claims 1 to 14, **characterized in that** an actuatable valve (50) is connected into the supply line (49).

16. Device according to Claim 15, **characterized in that** the displaceable valve face (54) of the valve (50) that interacts with the fixed valve seat (57) is the heat-exchanging surface of a Peltier element (51).

## Revendications

1. Dispositif pour conduire de l'ammoniac (NH₃) en phase gazeuse jusqu'à un catalyseur de réduction monté dans le système d'évacuation des gaz d'échappement d'un moteur à combustion interne, notamment d'un moteur diesel, comprenant un réservoir côté sortie relié au système d'évacuation des gaz d'échappement par une conduite d'arrivée (12, 49) destiné à stocker un précurseur (3, 3', 3" ; 39) dégageant du NH₃ après un apport de chaleur, par exemple du carbamate d'ammonium, comprenant également une installation de chauffage (4, 42) destiné à provoquer la fission thermolytique du NH₃ du précurseur (3, 3', 3" ; 39) de NH₃ **caractérisé en ce que** le dispositif (1, 30, 38) comprend une installation de chauffage (4, 42) électrique raccordée à une unité de commande et disposée dans un réservoir (2 ; 31, 31' ; 33 ; 44) et **en ce que** l'installation de chauffage (4, 42) et le précurseur de NH₃ (3, 3', 3" ; 31 ; 39) sont disposés l'un par rapport à l'autre dans le réservoir, de telle sorte qu'un réchauffement du précurseur de NH₃ (3, 3', 3" ; 39) provoque la fission thermolytique du NH₃ grâce au transfert direct de chaleur depuis au moins une surface (6) réchauffée de l'installation de chauffage (4, 42) sur le précurseur de NH₃ (3, 3', 3" ; 33 ; 39).

2. Dispositif selon la revendication 1 **caractérisé en ce que** le précurseur de NH₃ contenu dans le réservoir (2, 44) est une matière solide, notamment une pièce moulée (3, 3', 3" ; 33 ; 39) en forme de bâtonnet.

3. Dispositif selon la revendication 2 **caractérisé en ce que** la matière solide subit une pression qui l'appuie contre au moins une surface réchauffée (6) de l'installation de chauffage (4, 42).

4. Dispositif selon la revendication 3 **caractérisé en ce que** le réservoir (2) est scindé par un piston en deux compartiments (16, 17) de réservoir étanches au gaz l'un par rapport à l'autre, le précurseur NH3 (3, 3', 3") et l'installation de chauffage (4) étant disposés dans un compartiment (16) du réservoir et une installation de compression (18) conçue pour exercer un travail mécanique sur le précurseur de NH₃ (3, 3', 3") étant disposée dans un autre compartiment (17) du réservoir.

5. Dispositif selon la revendication 4 **caractérisé en ce qu'**un actionneur destiné à entraîner l'installation de compression (18), par exemple un électromoteur (23), est disposé à l'extérieur du réservoir (2) et qu'il est raccordé à l'installation de compression (18) se trouvant dans le réservoir (2) par un dispositif de couplage (22) dé-couplable.

6. Dispositif selon la revendication 3 **caractérisé en ce que** le réservoir (33, 44) est scindé par un piston en deux compartiments (16, 17) de réservoir étanches au gaz l'un par rapport à l'autre, le précurseur NH3 (3, 3', 3" ; 39) et l'installation de chauffage (4, 42) étant disposés dans un compartiment (16) du réservoir et l'autre compartiment du réservoir étant rempli avec un gaz sous pression, par exemple de l'azote.

7. Dispositif selon la revendication 4 à 6 **caractérisé en ce que** le piston est un piston rotatif (15).

8. Dispositif selon l'une des revendications 1 à 7 **caractérisé en ce que** l'installation de chauffage (4, 42) comprend une plaque chauffante (5 ; 46) disposée dans la zone de sortie du réservoir (2, 33, 44) qui débouche dans la conduite de liaison (12, 49), contre la surface (6) de laquelle s'appuie le précurseur de NH₃ (3, 3', 3" ; 39).

9. Dispositif selon la revendication 8 **caractérisé en ce qu'**un chauffage électrique par rayonnement (43, 43', 43") est disposé sur la face opposée au précurseur de NH₃ (39) de la plaque chauffante (46) de l'installation de chauffage (42).

10. Dispositif selon la revendication 8 ou 9 **caractérisé en ce que** la face de la plaque chauffante (46) orientée vers le précurseur de NH₃ (39) présente une surface structurée à la manière de picots.

11. Dispositif selon la revendication 9 ou 10 **caractérisé en ce que** la plaque chauffante (46) est constituée d'un matériau céramique en verre transparent ou translucide.

12. Dispositif selon l'une des revendications 1 à 11 **caractérisé en ce que** le réservoir (2, 44) avec son contenu est amovible par rapport aux autres pièces constituant le dispositif (1, 38) et que la sortie du réservoir (2) est raccordée à la conduite d'alimentation (12, 49) au moyen d'un dispositif de couplage (13).

13. Dispositif selon l'une des revendications 1 à 12 **caractérisé en ce que** l'installation de chauffage comprend divers éléments chauffants pouvant être commandés indépendamment les uns des autres et que chaque élément chauffant dispose de sa propre réserve de précurseur de NH₃.

14. Dispositif selon l'une des revendications 1 à 13 **caractérisé en ce que** le dispositif (30) comprend plusieurs réservoirs (31, 31') avec chacun une installation de chauffage.

15. Dispositif selon l'une des revendications 1 à 14 **caractérisé en ce qu'**une soupape (50) à commande est intégrée dans la conduite d'alimentation (49).

16. Dispositif selon la revendication 15 **caractérisé en ce que** la surface (54) mobile de la soupape (50) agissant conjointement avec le siège (57) fixe de la soupape est constituée de la surface à échange thermique d'un élément Peltier (51).
